Europäisches Patentamt

European Patent Office

Office européen des brevets

(11) Veröffentlichungsnummer: **0 235 610**
**B1**

(12) # EUROPÄISCHE PATENTSCHRIFT

(45) Veröffentlichungstag der Patentschrift:
07.06.89

(51) Int. Cl.⁴: **B 60 T 17/04**

(21) Anmeldenummer: **87101610.1**

(22) Anmeldetag: **06.02.87**

(54) Kupplungskopf für eine Vorratsleitung.

(30) Priorität: **05.03.86 DE 3607137**

(43) Veröffentlichungstag der Anmeldung:
**09.09.87 Patentblatt 87/37**

(45) Bekanntmachung des Hinweises auf die Patenterteilung: **07.06.89 Patentblatt 89/23**

(84) Benannte Vertragsstaaten:
**AT DE FR GB IT SE**

(56) Entgegenhaltungen:
**EP–A– 0 167 968**
**DE–A– 1 240 420**
**DE–A– 1 505 404**
**DE–A– 1 780 092**
**DE–A– 1 950 699**

(73) Patentinhaber: **ROBERT BOSCH GMBH**
**Postfach 50**
**D-7000 Stuttgart 1 (DE)**

(72) Erfinder: **Beck, Siegfried, Ing.**
**Stöfflerweg 8**
**D-7000 Stuttgart 80 (DE)**
Erfinder: **Grauel, Ingolf, Dipl.-Ing.**
**Lessingstrasse 26**
**D-7143 Vaihingen/Enz (DE)**
Erfinder: **Siebold, Manfred, Ing.**
**Amsterdamer Strasse 6**
**D-7030 Böblingen (DE)**

## Beschreibung

### Stand der Technik

Die Erfindung geht aus von einem Kupplungskopf nach der Gattung des Hauptanspruchs. Ein derartiger Kupplungskopf ist bekannt (DE-A-17 80 092).

Solche Kupplungsköpfe bewirken mit ihrem Ventil ein Abschliessen der zugwagenseitigen Vorratsleitung bei nicht angekuppeltem Anhänger.

Nun sollen in Zukunft die Bremsanlagen eines Anhängers mit kombinierten Einkammer-Federspeicher-Bremszylindern ausgerüstet werden, so wie sie bereits seit langem auf dem Zugwagen Vervendung finden. Der Betriebsbremsteil eines derartigen Bremszylinders ist meist mit einer Membran als Kolben versehen, und der Federspeicherbremsteil hat einen Kolben, der der Kraft einer starken Speicherfeder ausgesetzt ist. Bei vorhandenem Vorratsdruck spannt der Kolben die Feder, und die Bremse ist gelöst.

Wenn der Vorratsdruck ausfällt, kann sich die Speicherfeder unter Mitnahme des Kolbens entspannen und die Bremsen werden selbsttätig angelegt, z. B. im Notbremsfall.

Wenn der Fahrer eines mit solchen Einkammer-Federspeicher-Bremszylindern auf dem Anhänger ausgerüsteten Fahrzeug-Zuges mit seinem Zugwagen zum Ankuppeln des Anhängers, der mit von der Speicherfeder angelegten Bremsen abgestellt ist, durch Rückwärtsfahren an den Anhänger heranführt und dann den 1. Gang als Stillstandsbremse einlegt und den Motor abstellt und dann die Vorratsleitung durch Verbinden der Vorratsleitungskupplungsköpfe anschließt, dann löst die vom Zugwagen zum Anhänger überströmende Vorratsluft die Anhängerbremse. Dann muß der eingelegte 1. Gang nicht mehr nur den Zugwagen gebremst halten, sondern auch noch den jetzt bremslosen Anhänger. Das ist in manchen Fällen nicht möglich, so daß die Gefahr besteht, daß sich unter den angegebenen Umständen der ganze Zug ungewollt in Bewegung setzt. Schwere Unfälle können so entstehen.

### Vorteile der Erfindung

Bei Verwendung des eingangs genannten Kupplungskopfes mit den kennzeichnenden Merkmalen des Hauptanspruchs besteht demgegenüber der Vorteil, daß der Kupplungskopf entweder nur unter Gewaltanwendung mit einem Hilfswerkzeug, z. B. einer Zange kuppelbar ist oder daß er zwar gekuppelt werden kann, aber das Ventil im Kupplungskopf durch den Kuppelvorgang nicht geöffnet wird. Erst wenn — im zweiten Fall — der Fahrer die Feststellbremse betätigt, und damit die zum Anhänger führende Vorratsleitung entlastet, geht der Sperrkolben nach unten, öffnet das Ventil im Kupplungskopf, und der Anhänger ist beim darauffolgenden Lösen der Feststellbremse mit der Zugwagen-Vorratsleitung verbunden und damit fahrbereit.

### Zeichnung

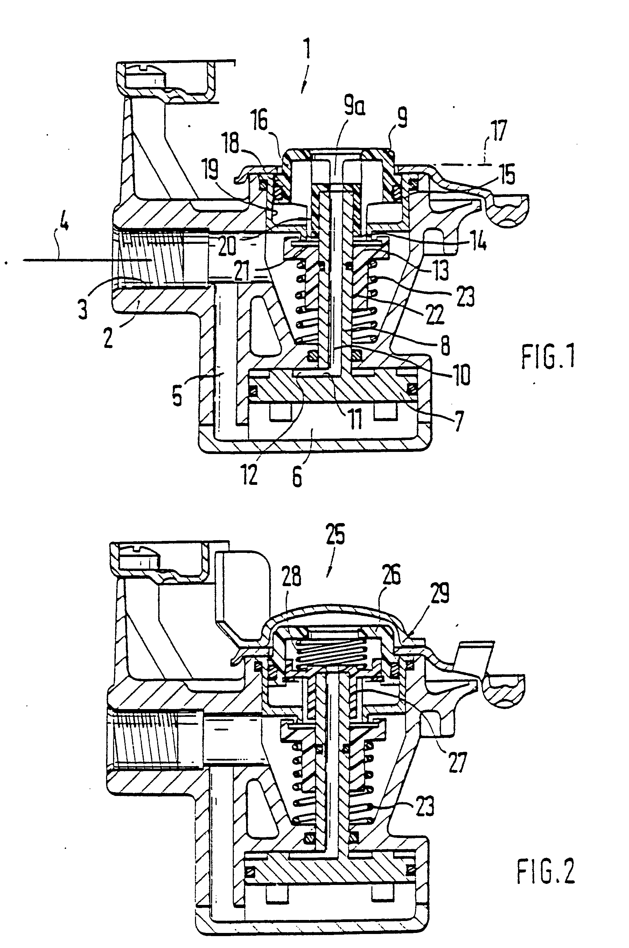

Zwei Ausführungsbeispiele der Erfindung sind in der Zeichnung dargestellt und in der nachfolgenden Beschreibung näher erläutert. Es zeigen: Figur 1 einen Kupplungskopf mit einteiliger Kappe und Figur 2 einen Kupplungskopf mit zweiteiliger Kappe.

### Beschreibung der Ausführungsbeispiele

Ein Kupplungskopf 1 hat ein Guß-Gehäuse 2 mit einem Vorratsanschluß 3 für eine zugwagenseitige Vorratsleitung. Vom Anschluß 3 führt ein Kanal 5 in eine Arbeitskammer 6, die von einem Sperrkolben 7 als beweglicher Wand begrenzt wird.

Der Sperrkolben 7 ist mit einem Stößel 8 fest verbunden, der an seinem anderen Ende eine axial durchbrochene Kappe 9 trägt. Der Stößel 8 hat eine Koaxialbohrung 10, die über einen Radialkanal 11 in eine ebenfalls vom Sperrkolben 7 begrenzte Rückseitenkammer 12 ausmündet.

Der hohle Stößel 8 durchdringt einen hohlen Schließkörper 13 und einen ringförmigen Ventilsitz 14 des Schließventils 13/14; letzteres ist mit einer Schulter 15 im Gehäuse 2 festgespannt.

Die Kappe 9 hat eine Koaxialbohrung 9a und weist nahe ihrem oberen Ende 16, mit dem sie in nicht gekuppeltem Zustand über eine Kuppelfläche 17 des Kupplungskopfes 1 herausragt, einen Führungsringansatz 18 auf, der im einer zylindrischen Aufnahme 19 der Schulter 15 abgedichtet geführt und axial beweglich ist. Die Kappe 9 has an ihrem anderen, inneren Ende 20 einen kurzen Rohransatz 21, mit dem sie sich an den Schließkörper 13 anlegen und diesen von seinem Ventilsitz 14 zum Öffnen des Schließventils 13/14 abheben kann. Der Schließkörper 13 ist mit einem Rohransatz 22 gleitend und abgedichtet auf der Mantelfläche des Stößels 8 beweglich. Er steht unter der Einwirkung einer Feder 23, die bestrebt ist, ihn auf seinem Ventilsitz 14 festzuhalten.

### Wirkungsweise

Bei nicht gekuppeltem Gegenkupplungskopf nehmen die beweglichen Teile im Kupplungskopf 1 die gezeichnete Lage ein. Die Kappe 9 sitzt auf dem oberen Ende des Stößels 8, und der mit dem Stößel 8 fest verbundene Sperrkolben 7 wird durch den Vorratsdruck in der Arbeitskammer 6 in seiner oberen Lage fixiert. Ein Kuppeln des Gegenkupplungskopfes ist damit ohne weiteres nicht möglich; eventuell aber unter Anvendung von Gewalt.

Wenn aber die Vorratsleitung 4 entlastet wird, fehlt die Kraft des Sperrkolbens 7, und die Kappe läßt sich nach unten drücken. Der Gegenkupplungskopf kann angeschlossen werden.

Wird in angekuppeltem Zustand die Vorratsleitung wieder unter Druck gesetzt, erhält nicht nur die Arbeitskammer 6 Druck sondern auch die Rückseitenkammer 12. Dadurch wird die Sperrkraft im der Arbeitskammer 6 nahezu aufgehoben, so daß die beweglichen Glieder im Kupplungskopf 1 entlastet sind.

Die Figur 2 zeigt eine ähnliche Ausführung wie die nach der Figur 1. Entsprechende Teile tragen deshalb die gleichen Bezugszeichen. Hier ist jedoch bei einem Kupplungskopf 25 eine Kappe 29 zweigeteilt in ein äußeres Kappenteil 26 und ein inneres Kappenteil 27. Beide Teile werden durch eine Spreizfeder 28 unter Vorspannung auseinander gedrückt, deren Kraft größer ist als die der Ventilfeder 23, aber kleiner ist als die vom Sperrkolben 7 unter Zugwagen-Vorratsdruck aufgebrachte Kraft.

Diese Bauart erlaubt zwar ein Kuppeln des Gegenkupplungskopfes trotz anstehendem Vorratsdruck, aber das Ventil 13/14 bleibt geschlossen.

Erst wenn der Druck in der Vorratsleitung, z. B. durch Betätigen der Feststellbremse abgesenkt wird, drückt die Feder 28 das Ventil 13/14 auf. Wenn nun die Vorratsleitung 1 wieder Druck erhält, kann sich dieser über das geöffnete Ventil 13/14 zum Anhänger fortpflanzen. In dieser Durchgangsstellung sind dann auch wieder die beweglichen Ventilglieder im Kupplungskopf 25 entlastet.

## Patentansprüche

1. Kupplungskopf für eine Vorratsleitung einer Druckluft-Bremsanlage von Fahrzeug-Zügen mit einem zugwagenseitigen Vorratsleitungs-Anschluß, einem Kupplungs-Anschluß und einem in einem Kupplungskopf-Gehäuse zwischen den beiden Anschlüssen liegenden, aufstoßbaren Schließventil, dadurch gekennzeichnet, daß ein Stößel (8) für das Ventil (13/14) einerseits einen ständig dem Vorratsdruck unterliegenden Sperrkolben (7) aufweist und andererseits eine einen hohlen Axialansatz (21) aufweisende Kappe (9, 29) trägt, die nach außen über eine Kuppelfläche (17) des Kupplungskopfes (1, 25) herausragt, und daß der Stößel (8) axial durchbrochen ist und die Kappe (9, 29) eine Koaxialbohrung (9a, 10) hat, die in eine vom Sperrkolben (7) begrenzte Rückseitenkammer (12) ausmündet.

2. Kupplungskopf nach Anspruch 1, dadurch gekennzeichnet, daß der Stößel einen hohlen Schließkörper (13) und einen gehäusefesten, ringförmigen Ventilsitz (14) des Ventils (13/14) durchdringt.

3. Kupplungskopf nach Anspruch 1 oder 2, dadurch gekennzeichnet, daß die Kappe (9) einteilig ist.

4. Kupplungskopf nach Anspruch 1 oder 2, dadurch gekennzeichnet, daß die Kappe (29) zweiteilig ist und unter Zwischenschaltung einer Spreizfeder (28) in Axialrichtung vorgespannt ist.

5. Kupplungskopf nach Anspruch 4, dadurch gekennzeichnet, daß die Kraft der Spreizfeder (28) größer ist als die der Ventilfeder (23) und kleiner ist als die vom Sperrkolben (7) unter Zugwagen-Vorratsdruck aufgebrachte Kraft.

## Claims

1. Coupling member for a reservoir supply line of a pressurized air brake installation of vehicle trains having a tractor-side reservoir supply line connector, a coupling connector, and a closure valve which can be pushed open and is located in a coupling member housing between the two connectors, characterized in that a push rod (8) for the valve (13/14) exhibits a blocking piston (7), permanently subject to the reservoir supply pressure, on the one hand and carries a cap (9, 29), exhibiting a hollow axial attachment (21), on the other hand, which cap protrudes outwards through a domed surface (17) of the coupling member (1, 25), and in that the push rod (8) is perforated axially and the cap (9, 29) has an axial bore (9a, 10) which leads into a rear chamber (12) delimited by the blocking piston (7).

2. Coupling member according to Claim 1, characterized in that the push rod penetrates a hollow closure element (13) and an annular valve seat (14) of the valve (13/14) which is integral with the housing.

3. Coupling member according to Claim 1 or 2, characterized in that the cap (9) is one-part.

4. Coupling member according to Claim 1 or 2, characterized in that the cap (29) is two-part and is pretensioned in the axial direction with interposition of a spreading spring (28).

5. Coupling head according to Claim 4, characterized in that the force of the spreading spring (28) is greater than that of the valve spring (23) and less than the force exerted by the blocking piston (7) under tractor reservoir supply pressure.

## Revendications

1. Tête d'accouplement pour conduite de réservoir d'une installation de freinage à air comprimé, pour des trains de véhicules, comprenant un raccordement de conduite de réservoir côté tracteur, un raccordement d'accouplement et une soupape d'obturation embrochable, placée dans le carter de tête d'accouplement, entre les deux raccordements, caractérisée en ce qu'un poussoir (8) de la soupape (13/14) présente d'une part un piston d'obturation (7) constamment soumis à la pression du réservoir et porte d'autre part un capuchon (9, 29) présentant un appendice axial (21) creux, capuchon émergeant vers l'extérieur par une face d'accouplement (17) de la tête d'accouplement (1, 25) et en ce que le poussoir (8) est traversé axialement et que le capuchon (9, 29) présente un alésage axial (9a, 10) débouchant dans une chambre de côté arrière délimitée par le piston d'obturation (7).

2. Tête d'accouplement selon la revendication 1, caractérisée en ce que le poussoir traverse un corps de fermeture (13) creux et un siège de soupape (14) de la soupape (13/14), fixe sur le carter, de forme annulaire.

3. Tête d'accouplement selon la revendication 1 ou 2, caractérisée en ce que le capuchon est d'une seule pièce.

4. Tête d'accouplement selon la revendication 1 ou 2, caractérisée en ce que le capuchon (29) est en deux parties et est précontraint en direction axiale en intercalant un ressort d'écartement (29).

5. Tête d'accouplement selon la revendication 4, caractérisée en ce que la force du ressort d'écartement (28) est plus importante que celle du ressort de soupape (23) et plus faible que la force appliquée par le piston d'obturation (7) sous l'effet de la pression du réservoir du tracteur.

FIG.1

FIG.2